# EUROPÄISCHE PATENTSCHRIFT

(11) **EP 1 031 062 B1**
(45) Veröffentlichungstag und Bekanntmachung des Hinweises auf die Patenterteilung: **24.03.2004**
(21) Anmeldenummer: 98938506.7
(22) Anmeldetag: 20.08.1998
(51) Int. Cl.: G02C 5/22

(54) **SCHARNIERGELENK ZWISCHEN EINEM BÜGEL UND EINEM BÜGELBACKEN EINES BRILLENGESTELLS**
HINGE BETWEEN A SIDE PIECE AND AN ENDPIECE OF GLASSES
ARTICULATION A CHARNIERE ENTRE UNE BRANCHE ET UN TENON D'UNE MONTURE DE LUNETTES

(30) Priorität: 17.09.1997 AT 156397
(43) Veröffentlichungstag der Anmeldung: 30.08.2000
(73) Patentinhaber: SILHOUETTE INTERNATIONAL SCHMIED GMBH & CO. KG., 4020 Linz (AT)
(72) Erfinder: FUCHS, Gerhard, A-4061 Pasching (AT); SPINDELBALKER, Rupert, A-4048 Puchenau (AT)
(74) Vertreter: Hübscher, Gerhard, Dipl.-Ing.
(86) Internationale Anmeldenummer: PCT/AT1998/000198
(87) Internationale Veröffentlichungsnummer: WO 1999/014628

(56) Entgegenhaltungen:
- EP-A- 0 695 962
- EP-A- 0 814 360
- EP-A- 0 838 711
- WO-A-97/23803
- DE-U- 9 417 374
- FR-A- 2 753 283
- GB-A- 2 281 979
- US-A- 1 955 690

## Beschreibung

Die Erfindung bezieht sich auf ein Scharniergelenk zwischen einem Bügel und einem Bügelbacken eines Brillengestells, wobei der Bügel und der Bügelbacken aus Draht gefertigte Teile sind, von denen einer ein haarnadelförmig gebogenes Endstück aufweist, zwischen dessen Schenkeln ein als Scharnierachse dienender Gelenkkörper zur Aufnahme eines Lagerauges formschlüssig gehalten ist, das aus einem zu einer umfangsseitig offenen Öse gebogenen Endstück des Drahtes des jeweils anderen Teiles besteht, wobei der Verbindungssteg zwischen den beiden Schenkeln des haarnadelförmigen Endstückes des einen Teils die das Lagerauge bildende Öse des anderen Teiles außen übergreift.

Bei Brillengestellen, deren Bügel und deren Bügelbacken aus einem gebogenen Draht gefertigt werden, ist es bekannt (WO 87/04806 A1), das freie Drahtende des Bügelbackens zu einer Scharnierachse abzuwinkeln, die in ein Lagerauge des Bügels eingreift, das aus einem schraubenförmig eingerollten Endstück des Bügeldrahtes gebildet wird. Um eine ausreichend spielfreie Halterung des Bügels auf der Schamierachse und damit eine entsprechende Sicherheit gegenüber einer Kippbewegung um eine Querachse zur Schamierachse zu erreichen, sind mehrere Windungen zur Bildung des Lagerauges vorzusehen. Trotz dieser Maßnahme kann die Führungsgenauigkeit eines solchen Scharniergelenkes höheren Anforderungen nicht genügen. Dazu kommt, daß sich der Drehwiderstand des Scharniergelenkes kaum einstellen läßt. Außerdem muß nach dem Einführen der Schamierachse in die Windungen des Lagerauges das die Scharnierachse bildende Endstück des Bügelbakkendrahtes zur axialen Sicherung des Lagerauges auf der Scharnierachse gegen das Scharnierauge zurückgebogen werden, was nicht ohne Werkzeugeinsatz durchgeführt werden kann.

Darüber hinaus ist es bei einem Scharniergelenk für den Bügel einer Brille bekannt (DE 94 17 374 U1), einen zylindrischen Gelenkkörper vorzusehen, auf den eine im wesentlichen geschlossene Öse eines Brillengestells axial aufgeschoben wird, die durch die Schenkel eines haarnadelförmig gebogenen Endstückes des Brillenbügels umgriffen wird. Um die Gängigkeit des Scharniergelenks zu regulieren, wird das haarnadelförmig gebogene Endstück des Bügels unter einer Vorspannung an die Öse angedrückt, so daß der Bügel erst nach Überwindung eines vorgegebenen Reibungswiderstandes verschwenkt werden kann. Aus diesem Grunde ist eine Sicherungsschraube erforderlich, die das haarnadelförmige Endstück des Bügels verschiebefest im Gelenkkörper festlegt. Nachteilig ist außerdem, daß die Führung des Bügels gegenüber dem Brillengestell mangelhaft ist, weil die den zylindrischen Gelenkkörper umfassende Öse ein Kippen des Gelenkkörpers nicht ausschließen kann.

Wird die Schamierachse nicht durch ein abgebogenes Drahtende, sondern durch einen Gelenkkörper gebildet, der von dem den Bügelbacken bildenden Draht getragen wird und eine koaxiale Umfangsnut zur Aufnahme des Lagerauges aufweist, das aus einer umfangsseitig offenen, aus dem Endstück des Drahtes des Bügels gebogenen Öse besteht (GB 2 281 979 A), so läßt sich eine gute Führungsgenauigkeit für das Scharniergelenk erzielen. Nachteilig bei diesem bekannten Scharniergelenk ist allerdings, daß der Draht des Bügelbackens einerseits mit dem Gelenkkörper drehfest verbunden werden muß und anderseits mit einem abgewinkelten Ende einen Drehanschlag für den Bügel ergeben soll, was zur Gefahr einer Überlastung des Scharniergelenkes führt, selbst wenn der Gelenkkörper vom Draht des Bügelbakkens koaxial durchsetzt wird. Außerdem kann die sich über etwa 270° erstreckende Drahtöse bei einer vergleichsweise geringen Druckkraft auf den Bügel aus der Umfangsnut austreten, wobei sich der Bügel vom Backen löst.

Der Erfindung liegt somit die Aufgabe zugrunde, ein Scharniergelenk zwischen einem Bügel und einem Bügelbacken eines Brillengestells der eingangs geschilderten Art mit einfachen konstruktiven Mitteln so auszugestalten, daß eine verdrehsichere Halterung des Gelenkkörpers sichergestellt werden kann, die auch höheren Belastungsanforderungen entspricht.

Die Erfindung löst die gestellte Aufgabe dadurch, daß der Gelenkkörper zwischen den beiden Schenkeln des haarnadelförmigen Endstückes eine koaxiale Umfangsnut bildet, in die die umfangsseitig offene Öse des anderen Teils federnd einrastet, und daß einer der beiden Schenkel des haarnadelförmig gebogenen Endstückes des den Gelenkkörper tragenden Teiles einen gegen den anderen Schenkel vorragenden, in eine Vertiefung der Umfangsnut auf der dem Verbindungssteg zugekehrten Seite des Gelenkkörpers eingreifenden Anschlag für die zwischen diesem Anschlag und dem Verbindungssteg geführte Öse aufweist.

Das Einspannen des Gelenkkörpers zwischen den beiden Schenkeln eines haarnadelförmig gebogenen Drahtendstückes stellt eine wirksame Drehsicherung des Gelenkkörpers gegenüber diesem Drahtendstück dar, wobei der Verbindungssteg zwischen den beiden Schenkeln, der die in die Umfangsnut des Gelenkkörpers eingreifende Öse außen umschließt, eine zusätzliche Sicherung gegen ein unbeabsichtigtes Ausrasten der das Lagerauge bildenden Öse aus der Umfangsnut des Gelenkkörpers bildet. Außerdem kann der Verbindungssteg zwischen den beiden Schenkeln zur Begrenzung des Schwenkwinkels des Scharniergelenkes herangezogen werden, wenn der das Lagerauge formende Draht an der dem freien Drahtende gegenüberliegenden Seite der umfangseitigen Ösenöffnung einen radial nach außen abstehenden Steg aufweist, der mit dem Verbindungssteg des haarnadelförmig gebogenen Endstückes des den Gelenkkörper tragenden Teiles als Drehanschlag zusammenwirkt. Nach einem vorgegebenen Schwenkwinkel des Bügels gegenüber dem Bügelbacken schlägt der im Anschluß an die Öse radial nach außen abstehende Steg an den Verbindungssteg zwischen den Schenkeln des haarnadelförmig gebogenen Endstückes an, so daß durch diesen Drehanschlag die Gebrauchsstellung des Bügels in einfacher Weise konstruktiv vorgegeben werden kann.

Durch den einem der beiden Schenkel des haarnadelförmig gebogenen Endstückes zugeordneten Anschlag, der in eine Vertiefung der Umfangsnut auf der dem Verbindungssteg zugekehrten Seite des Gelenkkörpers eingreift, wird in einfacher Weise eine Verschiebesicherung des Gelenkkörpers auf den beiden Schenkeln des haarnadelförmig gebogenen Endstückes über die in die Umfangsnut eingreifende Öse erreicht, weil diese Öse zwischen dem Verbindungssteg und dem Anschlag gegen eine Verschiebung entlang der Schenkel festgehalten wird. Damit ist aber auch eine Verschiebesicherung für den Gelenkkörper gegeben, der ja von der Öse umfaßt wird. In diesem Zusammenhang ist außerdem zu bedenken, daß bei der Handhabung der Brille Verschiebekräfte im allgemeinen über die Öse auf den Gelenkkörper übertragen werden.

Die Verschiebesicherung des Gelenkkörpers auf den Schenkeln des haarnadelförmig gebogenen Endstückes ist vor allem dann von Bedeutung, wenn die beiden Schenkel dieses Endstückes den Gelenkkörper in Durchtrittsöffnungen durchsetzen, weil in diesem Fall keine zusätzlichen Maßnahmen erforderlich werden, die Schenkel innerhalb der Durchtrittsöffnungen verschiebefest zu halten. Der ein freies Ende aufweisende Schenkel des haarnadelförmig gebogenen Endstückes könnte zwar auf der Austrittsseite der Durchtrittsöffnung des Gelenkkörpers umgebogen werden, um ein Abziehen des Gelenkkörpers von diesem Schenkel zu verhindern, doch müßte hiefür ein Werkzeug eingesetzt werden. Vorteilhaftere Montageverhältnisse für den Gelenkkörper ergeben sich, wenn die Schenkel des haarnadelförmig gebogenen Endstückes durchgehend parallel zueinander verlaufen. Um bei einer solchen konstruktiven Ausbildung das freie Ende des einen Schenkels gegenüber dem anderen Schenkel festzulegen, kann das freie Ende des einen Schenkels in ein Sackloch eines Schließstückes eingreifen, das vom anderen Schenkel in einer Durchtrittsöffnung durchsetzt ist. Diese Verbindung der beiden Schenkel auf der dem Verbindungssteg gegenüberliegenden Seite empfiehlt sich insbesondere, wenn der Bügel als der den Gelenkkörper tragende Teil eingesetzt wird.

In der Zeichnung ist der Erfindungsgegenstand beispielsweise dargestellt. Es zeigen
- Fig. 1: ein erfindungsgemäßes Scharniergelenk zwischen einem Bügel und einem Bügelbacken eines Brillengestells in einer schematischen Draufsicht in Richtung der Scharnierachse und
- Fig. 2: dieses Scharniergelenk in einem Schnitt nach der Linie II-II der Fig. 1.

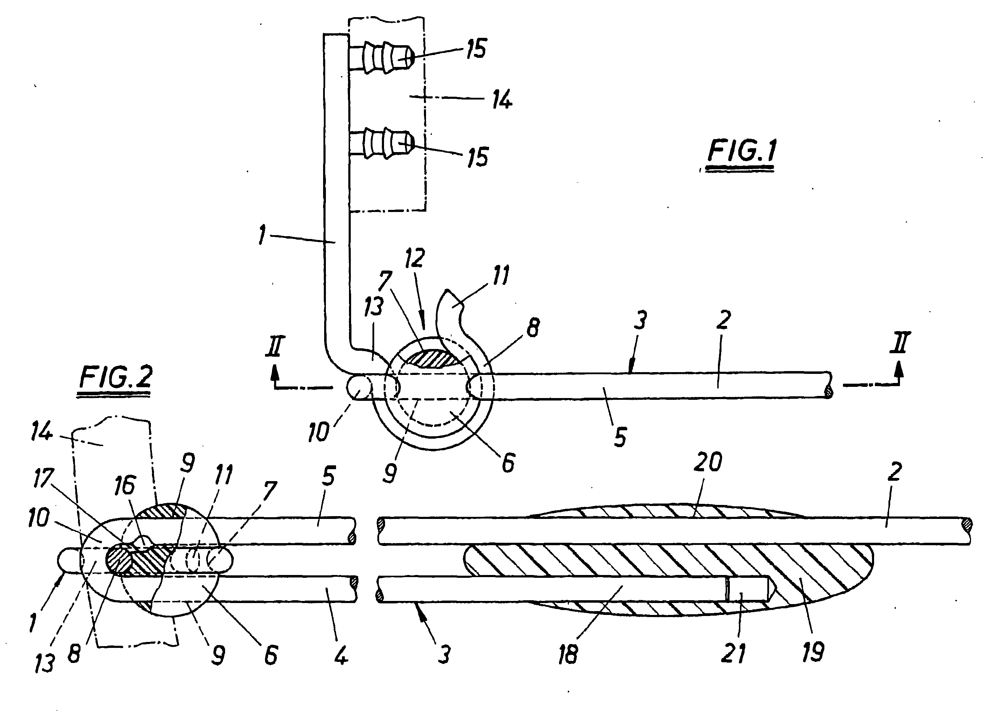

Gemäß dem dargestellten Scharniergelenk zwischen einem Bügelbacken 1 und einem Bügel 2, welche Teile 1, 2 jeweils aus einem dünnen Draht geformt sind, bildet der Bügel 2 scharnierseitig ein haarnadelförmig gebogenes Endstück 3, zwischen dessen Schenkeln 4, 5 ein Gelenkkörper 6 als Scharnierachse eingespannt ist. Dieser Gelenkkörper 6, der vorteilhaft als Rotationskörper ausgebildet ist, weist zwischen den Schenkeln 4 und 5 eine Umfangsnut 7 auf, in die eine durch den Draht des Bügelbackens 1 gebildete, umfangseitig offene Öse 8 federnd eingreift. Die Anordnung ist dabei so getroffen, daß die Schenkel 4 und 5 des Endstückes 3 den Gelenkkörper 6 in Durchtrittsöffnungen 9 durchsetzen, so daß der Verbindungssteg 10 zwischen den Schenkeln 4 und 5 die Öse 8 außen umgreift, wie dies insbesondere der Fig. 2 entnomen werden kann. Die Öse 8 kann daher nicht in Richtung der Schenkel 4, 5 des Endstückes 3 gegen den Verbindungssteg 10 hin vom Gelenkkörper 6 abgezogen werden.

Auf der dem freien Drahtende 11 gegenüberliegenden Seite der umfangseitigen Ösenöffnung 12 schließt an die Öse 8 ein radial nach außen abstehender Steg 13 an, der mit dem Verbindungssteg 10 als Gegenanschlag einen Drehanschlag für das Scharniergelenk bildet, wie dies insbesondere aus der Fig. 1 ersichtlich ist. Aus der gezeichneten, anschlagbegrenzten Gebrauchsstellung kann der Bügel 2 einwärts gegen ein Brillenglas 14 verschwenkt werden, an dem der Bügelbacken 1 beispielsweise über in Glasbohrungen eingreifende Dübel 15 befestigt ist. Die sich federnd an die Umfangsnut 7 anlegende Öse 8 stellt dabei eine spielfreie Schwenkführung zwischen dem Bügelbacken 1 und dem Bügel 2 sicher, wobei durch die Wahl der federnden Vorspannung, mit der die Öse 8 den Gelenkkörper 6 in der Umfangsnut 7 umschließt, eine einfache Gangregulierung möglich wird.

Um den Gelenkkörper 6, der lediglich auf die Schenkel 4 und 5 des Endstückes 3 des Bügels 2 aufgesteckt wird, auf den Schenkeln 4 und 5 verschiebefest zu halten, ist einer der beiden Schenkel 4, 5 mit einem gegen den anderen Schenkel vorragenden Anschlag 16 für den sich zwischen dem Verbindungssteg 10 und dem Anschlag 16 befindlichen Abschnitt der Öse 8 versehen. Dieser Anschlag 16 greift in eine Vertiefung 17 der Umfangsnut 7 des Gelenkkörpers 6 ein, so daß der Anschlag 16 innerhalb der Umfangsnut 7 zu liegen kommt und folglich die Führung der Öse 8 in der Umfangsnut 7 nicht beeinträchtigen kann. Aufgrund dieses Anschlages 16 kann die Öse 8 nicht entlang der Schenkel 4 und 5 vom Verbindungssteg 10 weg verlagert werden, wie dies der Fig. 2 unmittelbar zu entnehmen ist. Mit der Verschiebesicherung der Öse 8 ist zugleich eine Verschiebesicherung des Gelenkkörpers 6 entlang der Schenkel 4 und 5 gegeben, weil ja die Öse 8 den Gelenkkörper 6 umfangseitig umfaßt.

Zur Montage des Scharniergelenkes ist zunächst der Gelenkkörper 6 auf die Schenkel 4, 5 des haarnadelförmig gebogenen Endstückes des Bügels aufzustecken, bis der Anschlag 16 in die zugehörige Vertiefung 17 des Gelenkkörpers 6 eingreift. Danach kann die Öse 8 über das freie Drahtende 11 zwischen dem Verbindungssteg 10 und dem Anschlag 16 in die Umfangsnut 7 eingefädelt und schnappverschlußartig in die Umfangsnut 7 eingerastet werden. Diese schnappverschlußartige Aufnahme der Öse 8 in der Umfangsnut 7 wird durch das radial abstehende Drahtende 11 und den radial ausgerichteten Steg 13 erleichtert, welche Drahtabschnitte eine entsprechende Einführhilfe im Bereich der Ösenöffnung 12 ergeben. Über diese Einführhilfe wird nämlich die Öse beim Einrasten in die Umfangsnut 7 des Gelenkkörpers 6 aufgeweitet, um dann unter einer federnden Vorspannung an der Umfangsnut 7 spielfrei anzuliegen.

Um das freie Ende 18 des Schenkels 4 gegenüber dem anderen Schenkel 5 des haarnadelförmig gebogenen Endstückes 3 festzulegen, kann ein Schließstück 19 zum Einsatz kommen, das eine Durchtrittsöffnung 20 für den Schenkel 5 und ein Sackloch 21 zur Aufnahme des freien Endes 18 des Schenkels 4 aufweist, wie dies in der Fig. 2 angedeutet ist.

## Patentansprüche

1. Scharniergelenk zwischen einem Bügel (2) und einem Bügelbacken (1) eines Brillengestells, wobei der Bügel (2) und der Bügelbacken (1) aus Draht gefertigte Teile sind, von denen einer ein haarnadelförmig gebogenes Endstück (3) aufweist, zwischen dessen Schenkeln (4, 5) ein als Scharnierachse dienender Gelenkkörper (6) zur Aufnahme eines Lagerauges formschlüssig gehalten ist, das aus einem zu einer umfangsseitig offenen Öse (8) gebogenen Endstück des Drahtes des jeweils anderen Teiles (1) besteht, wobei der Verbindungssteg (10) zwischen den beiden Schenkeln (4, 5) des haarnadelförmigen Endstückes (3) des einen Teils (2) die das Lagerauge bildende Öse (8) des anderen Teiles (1) außen übergreift, **dadurch gekennzeichnet, daß** der Gelenkkörper (6) zwischen den beiden Schenkeln (4, 5) des haarnadelförmigen Endstückes (3) eine koaxiale Umfangsnut (7) bildet, in die die umfangsseitig offene Öse (8) des anderen Teils (1) federnd einrastet, und daß einer der beiden Schenkel (4, 5) des haarnadelförmig gebogenen Endstückes (3) des den Gelenkkörper (6) tragenden Teiles (2) einen gegen den anderen Schenkel (4) vorragenden, in eine Vertiefung (17) der Umfangsnut (7) auf der dem Verbindungssteg (10) zugekehrten Seite des Gelenkkörpers (6) eingreifenden Anschlag (16) für die zwischen diesem Anschlag (16) und dem Verbindungssteg (10) geführte Öse (8) aufweist.

2. Scharniergelenk nach Anspruch 1, **dadurch gekennzeichnet, daß** das freie Ende (18) des einen Schenkels (4) des haarnadelförmig gebogenen Endstückes (3) des den Gelenkkörper (6) tragenden Teiles (2) in ein Sackloch (21) eines Schließstückes (19) eingreift, das vom anderen Schenkel (5) in einer Durchtrittsöffnung (20) durchsetzt ist

## Claims

1. A hinge joint between a temple (2) and a temple cheek (1) of a spectacle frame, wherein the temple (2) and the temple cheek (1) are wire parts, one of which has an end piece (3) bent in a hairpin shape and with limbs (4, 6) between which a joint member (6) serving as a hinge pin is positively held for receiving a bearing eyelet comprising an end piece of the other wire part (1) bent to form a peripherally open eyelet (8), wherein the connecting web (10) between the two limbs (4, 5) of the hairpin-shaped end piece (3) of the one part (2) extends on the outside of the eyelet (8) or bearing eyelet of the other part (1), **characterised in that** between the two limbs (4, 5) of the hairpin-shaped end piece (3), the joint member (6) has a coaxial peripheral groove (7) in which the peripherally open eyelet (6) of the other part (1) resiliently engages, and one of the two limbs (4,. 5) of the hairpin-shaped end piece (3) of the part (2) bearing the joint member (6) has a stop (16) for the eyelet (8) guided between the stop (16) and the connecting web (10), the stop projecting towards the other limb (4) and engaging in a recess (17) in the peripheral groove (7) on the side of the joint member (6) facing the connecting web (10).

2. A hinge joint according to claim 1, **characterised in that** the free end (18) of the one limb (4) of the hairpin-shaped end piece (3) of the part (2) bearing the joint member (6) engages in a blind bore (21) in a closing member through which the other limb (5) extends in a passage opening (20).

## Revendications

1. Articulation à charnière entre une branche (2) et un tenon (1) d'une monture de lunettes, la branche (2) et le tenon (1) étant des pièces fabriquées en fil, dont l'une présente une pièce d'extrémité (3) pliée en forme d'épingle à cheveux, entre les branches (4, 5) de laquelle un corps d'articulation (6), servant d'axe de charnière, étant maintenu par une liaison à ajustement de forme pour supporter un oeillet de palier, qui est formé d'une pièce d'extrémité du fil chaque fois de l'autre partie (1), pliée pour obtenir une boucle (8) ouverte en périphérie, le pontet de liaison (10) entre les deux branches (4, 5) de la pièce d'extrémité (3), en forme d'épingle à cheveux, d'une première partie (2) entourant extérieurement la boucle (8), formant l'oeillet de palier, de l'autre partie (1), **caractérisée en ce que** le corps d'articulation (6) forme, entre les deux branches (4, 5) de la pièce d'extrémité (3) en forme d'épingle à cheveux, une gorge périphérique (7) coaxiale, dans laquelle s'encliquette, de façon élastique, la boucle (8), ouverte en périphérie, de l'autre partie (1), et **en ce que** l'une des deux branches (4, 5) de la pièce d'extrémité (3), pliée en forme d'épingle à cheveux, de la partie (2) portant le corps d'articulation (6), présente une butée (16) faisant saillie vers l'autre branche (4) et s'engageant dans un creusement (17) de la gorge périphérique (7), sur la face, tournée vers le pontet de liaison (10), du corps d'articulation (6), butée (16) prévue pour la boucle (8) guidée entre cette butée (16) et le pontet de liaison (10).

2. Articulation à charnière selon la revendication 1, **caractérisée en ce que** l'extrémité (18) libre d'une branche (4) de la pièce d'extrémité (3), pliée en forme d'épingle à cheveux, de la partie (2) portant le corps d'articulation (6), s'engage dans un trou borgne (21) d'une pièce de fermeture (19), traversée par l'autre branche (5), passant dans une ouverture de passage (20).
